**Europäisches Patentamt**

(19) **European Patent Office**

**Office européen des brevets**

(11) Numéro de publication: **0 040 123**
**B1**

(12) **FASCICULE DE BREVET EUROPEEN**

(45) Date de publication du fascicule du brevet:
01.02.84

(21) Numéro de dépôt: **81400648.2**

(22) Date de dépôt: **24.04.81**

(51) Int Cl³: **B 62 D 25/04**

(54) **Montant de panneau latéral de carrosserie de véhicule.**

(30) Priorité: **12.05.80 FR 8010625**

(43) Date de publication de la demande:
**18.11.81 Bulletin 81/46**

(45) Mention de la délivrance du brevet:
**01.02.84 Bulletin 84/5**

(84) Etats contractants désignés:
**DE GB IT**

(73) Titulaire: **SOCIETE ANONYME AUTOMOBILES
CITROEN, 117 à 167, Quai André Citroen, F-75747 Paris
Cedex 15 (FR)**
Titulaire: **AUTOMOBILES PEUGEOT, 75, avenue de la
Grande Armée, F-75116 Paris (FR)**

(72) Inventeur: **Chevrier, Jean-Claude, 14 bis, rue Colbert,
F-92290 Chatenay-Malabry (FR)**

㉔ Mandataire. **Michardière, Bernard et al, Cabinet
Plasseraud 84, rue d'Amsterdam, F-75009 Paris (FR)**

(56) Documents cités:
**FR - A - 2 023 245
US - A - 2 197 644
US - A - 2 991 120
US - A - 3 132 891
US - A - 3 779 595**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

BUNDESDRUCKEREI BERLIN

# Montant de panneau latéral de carrosserie de véhicule

L'invention est relative à un montant de panneau latéral de carrosserie de véhicule, formé par une zone du panneau qui relie les bords longitudinaux supérieur et inférieur de ce panneau, et par des éléments de renforcement de cette zone, laquelle comprend deux parties décalées dans le sens de la hauteur et ayant des plans moyens différents, ces deux parties étant reliées par une bande de transition.

Un montant de ce genre est décrit dans le brevet US-A-3 132 891, la structure générale de ce montant étant celle d'un corps creux unique formé par un élément intérieur et deux éléments extérieurs s'étendant sur toute la hauteur du montant. La bande de transition, ménagée sur un des éléments extérieurs, et reliant deux parties dont les plans moyens sont différents est prévue à la base du montant pour faciliter l'ancrage de ce montant, et n'intervient pas véritablement dans la structure même du montant. En outre, la réalisation d'un longeron creux, à la base du montant, et l'assemblage de ce longeron avec le montant sont relativement compliqués.

Un tel montant, par exemple, un montant central situé entre les passages de portes avant et arrière, est soumis à des sollicitations importantes, notamment en cas de choc latéral.

L'invention a pour but, surtout, de fournir un montant de panneau latéral de carrosserie de véhicule qui, tout en étant d'une construction simple, offre une bonne résistance mécanique, en particulier à l'égard des chocs latéraux, sans qu'il en résulte une augmentation sensible de poids ni une augmentation sensible du prix de revient.

Selon l'invention, un montant de panneau latéral de carrosserie de véhicule, du genre défini précédemment, est caractérisé par le fait que les deux parties de la susdite zone sont situées respectivement à l'extérieur et à l'intérieur du montant, que la bande de transistion est située sensiblement à mi-hauteur du panneau latéral, que les éléments de renforcement comprennent une doublure interne rapportée derrière la partie située vers l'intérieur et un voile externe de recouvrement rapporté sur la partie située vers l'intérieur, de telle sorte qu'un corps creux supérieur et un corps creux inférieur soient formés, et que la partie située vers l'intérieur est bordée par une nervure tournée vers l'extérieur et s'étendant suivant la longueur du panneau.

Avantageusement, la doublure interne et le voile externe sont disposés et agencés de manière qu'il y ait une superposition partielle de leurs extrémités venant se raccorder à la zone du panneau, de chaque côté de la bande de transition.

De préférence, la partie haute de la zone est située vers l'extérieur tandis que la partie basse est située vers l'intérieur, la nervure étant prévue sur le bord inférieur de cette partie basse.

L'invention consiste, mises à part les dispositions exposées ci-dessus, en certaines autres dispositions dont il sera plus explicitement question ci-après à propos d'un mode de réalisation particulier décrit avec référence au dessin ci-annexé, mais qui n'est nullement limitatif.

La figure 1, de ce dessin, est une coupe schématique, à grande échelle, suivant I-I, figure 5 d'un montant central de panneau latéral de carrosserie, conforme à l'invention, pour véhicule automobile.

La figure 2 est une coupe schématique suivant II-II, figure 1.

La figure 3 est une coupe schématique suivant III-III figure 1.

La figure 4 est une coupe schématique suivant IV-IV figure 1.

La figure 5, enfin, est une vue en élévation partielle, d'un panneau latéral de carrosserie de véhicule, dans la région du montant central.

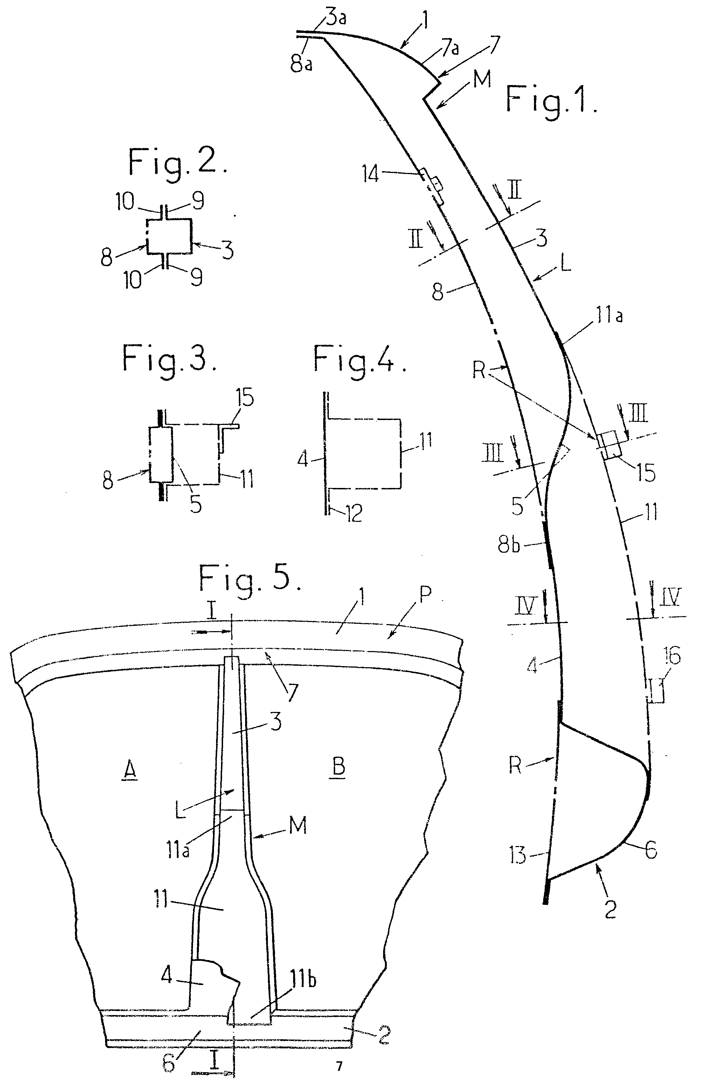

En se reportant au dessin, on peut voir un montant central M de panneau latéral P de carrosserie de véhicule automobile. Ce montant central M sépare le passage A (fig. 5) de porte avant du passage B de porte arrière.

Le montant central M est formé par une zone L du panneau P qui relie les bords longitudinaux supérieur 1 et inférieur 2 de ce panneau. Le bord supérieur 1 du panneau contribue à la formation du brancard supérieur de pavillon.

Des éléments de renforcement R contribuent, avec la zone L, à la formation du montant M.

Le panneau latéral P a un conteur fermé, le bord supérieur 1 étant relié au bord inférieur 2 par des portions d'encadrement périphérique non représentées sur la fig. 5.

La zone L du panneau comprend, comme visible sur la figure 1, deux parties 3, 4, décalées suivant le sens de la hauteur et ayant des plans moyens différents, respectivement extérieur et intérieur; ces deux parties 3 et 4 sont reliées par une bande de transition 5 située sensiblement à mi-hauteur; la partie 4, située vers l'intérieur, est bordée par une nervure 6 tournéevers l'extérieur.

La bande 5 a une section longitudinale sensiblement en S, avec point d'inflexion.

Il est clair que les termes »intérieur« et »extérieur« doivent être compris par rapport à l'habitacle du véhicule c'est-à-dire que la partie 4 est située, suivant une direction transversale par rapport au véhicule, plus près de l'habitacle du véhicule que la partie extérieure 3.

Avantageusement, la partie extérieure 3 constitue la partie haute de la zone L tandis que la partie intérieure 4 est la partie basse de cette zone. La nervure 6 est prévue sur le bord inférieur de ladite partie basse.

La partie haute 3, disposée au-dessus de la ligne de ceinture latérale (cette ligne de ceinture latérale correspondant sensiblement à une ligne passant par les niveaux des bas de glace) comporte, en extrémité haute, une nervure 7, vers l'extérieur, notamment à surface 7a arrondie. Cette nervure 7 se prolonge longitudinalement de part et d'autre de la zone L, suivant le bord supérieur 1 de manière à permettre la réalisation, avec des éléments complémentaires, d'un caisson longitudinal creux constituant le brancard de pavillon.

Une doublure 8 de renfort interne, de type épais, constitue l'un des éléments de renforcement, et se combine avec la partie haute 3 pour former un caisson supérieur, suivant toute l'étendue de cette partie. Cette doublure 8 peut comporter, à son extrémité supérieure, des prolongements, orientés suivant la direction longitudinale de la carrosserie, propres à former avec les prolongements longitudinaux de la nervure 7, le brancard de pavillon.

L'assemblage des extrémités hautes de la partie 3 et de la doubles 8 s'effectue, dans de bonnes conditions, notamment par soudage, au niveau des bords 3a, 8a, appliqués à plat, l'un contre l'autre, comme montré sur la figure 1.

La section transversale du corps creux formé par la partie 3 et la doublure 8 est visible sur la figure 2; la section transversale de la partie 3 a la forme d'un U tournant sa concavité vers l'intérieur de l'habitacle. Les extrémités des ailes de ce U sont repliées sensiblement à 90° vers l'extérieur pour former des bords 9. La partie de la doublure 8, destinée à former un caisson avec la partie 3, a une section transversale en forme de U dont la concavité est tournée vers l'extérieur. Les extrémités des ailes de ce U sont repliées sensiblement à 90° pour former des bords 10 qui viennent en appui contre les bords 9, auxquels ils sont reliés, notamment par soudure.

Le bord inférieur 8b de la doublure 8 s'étend audelà de la bande de transistion 5, comme visible sur la figure 1, de manière à s'appliquer et à être fixé contre la zone supérieure de la partie 4.

Un voile épais de recouvrement 11 assure la continuité du profil de flanc en prenant extérieurement appui sur la zone inférieure de la partie haute 3; le bord supérieur 11a du voile est fixé sur la partie 3 tandis que le bord inférieur 11b du voile est fixé sur la partie convexe, tournée vers l'extérieur, de la nervure 6. Comme visible d'aorès la figure 4, la partie inférieure 4 de la zone L présente des génératrices rectilignes parallèles à la direction longitudinal du véhicule; la section transversale du voile 11 a la forme d'un U dont la concacité est tournée vers l'intérieur; les extrémités 12 des ailes du U sont repliées sensiblement à 90° vers l'extérieur et sont appliquées et fixées contre la partie 4 de telle sorte que le montant M comporte également un caisson inférieur.

Un renfort interne 13 referme la concavité de la nervure 6 tournée vers l'intérieur; ce renfort interne 13 s'étend suivant toute la longueur du panneau latéral P, de même que la nervure 6. L'assemblage de ce renfort interne 13 et de la nervure 6 permet de réaliser le corps de longeron inférieur du panneau de côté P.

Comme visible d'après les figures 1 et 3, il y a superposition partielle de l'extrémité inférieure de la doublure 8 et de l'extrémité supérieure du voile externe 11 de telle sorte qu'au niveau de la ligne de ceinture, trois épaisseur de tôle sont superposées et assemblées (fig. 3) puisque la bande de transition 5 est comprise entre ces extrémités qui se recouvrent partiellement.

Il en résulte une forte rigidité transversale par coopération imbriquée des corps creux supérieur et inférieur, progressivement superposés dans la bande de transition médiane 5.

Les éléments rapporté 8, 11 sur la zone de retombée L permettent la fixation d'organes travaillant, tels que, par exemple, une plaquette 14 d'ancrage supérieur de ceinture de sécurité, ou des charnières de porte 15, 16.

Il est à noter, comme visible d'après les figures 2, 3 et 4, que les ailes des sections transversales en U formant le caisson supérieur et le caisson inférieur sont formées par des flancs de retombée dont la profondeur est modulée afin de constituer une ligne de joint continue et bien équilibrée à l'intérieur d'un plan de galbe régulier.

Selon l'invention, en quelque sorte, on réalise une translation du plan moyen du panneau latéral P au niveau de la ligne médiane de ceinture.

En plus de la forte rigidité transversale évoquée précédemment, l'invention permet d'assurer une continuité au niveau du longeron, notamment inférieur, formé par l'assemblage de la nervure 6 et du renfort 13 qui s'étendent suivant toute la longueur du panneau de côté P. L'intégrité des proriétés physiques et mécaniques de cet organe essentiel est ainsi sauvegardé.

La continuité de la zone L du panneau P est assurée en extrémité haute de la partie 3 au niveau de son assemblage avec le bord 8a, assemblage présentant ainsi une résistance mécanique satisfaisante en dépit de l'important resserrement latéral supérieur de la géométrie du montant central par suite des exigences de visibilité et d'accès.

La robustesse des éléments épais rapportés 8 et 11 autorise l'accostage direct de pièces de fatigue telles que chanières ou analogues, ce qui permet de réduire de façon sensible le nombre de pièces de renforcement habituellement utilisées.

Il est à noter que par éléments »épais«, on désigne des éléments dont l'épaisseur est du même ordre que celle des pièces en tôle constituant la structure du véhicule, cette épaisseur étant nettement supérieure à celle des pièces en tôle qui constituent l'enveloppe ou l'habillage de la caisse.

Les zones de raccordement extérieures notamment entre le voile 11 externe et la partie 3 sont masquées par un habillage approprié; un tel habillage se trouve normalement réalisé par la mise en place des portes latérales à l'intérieur de leurs encadrements, la périphérie des panneaux de porte venant coiffer, à la manière d'un couvercle, les baies d'encadrement et reconstituer la continuité du carénage latéral.

L'invention présente également de l'intérêt pour les autres montants du panneau latéral, notamment pour le montant de custode arrière.

**Revendications**

1. Montant de panneau latéral de carrosserie de véhicule, formé par une zone (L) du panneau qui relie les bords longitudinaux supérieur (1) et inférieur (2) de ce panneau et par des éléments de renforcement de cette zone, laquelle comprend deux parties (3, 4) décalées dans le sens de la hauteur et ayant des plans moyens différents, ces deux parties étant reliées par une bande de transition (5) caractérisé par le fait que les deux parties (3, 4) de la zone (L) sont situées respectivement à l'extérieur et à l'intérieur du montant; que la bande de transition (5) est située sensiblement à mi-hauteur du panneau latéral et que les éléments de renforcement comprennent une doublure interne (8) rapportée derrière la partie (3) située vers l'extérieur et un voile externe de recouvrement (11) rapporté sur la partie (4) située vers l'intérieure, de telle sorte qu'un corps creux supérieur et un corps creux inférieur soient formés; et que la partie (4) située vers l'intérieur est bordée par une nervure (6) tournée vers l'extérieur et s'étendant suivant la lonqueur du panneau.

2. Montant selon la revendication 1, caractérisé par le fait que la doublure interne (8) et le voile externe (11) sont disposés et agencés de manière qu'il y ait une superposition partielle de leurs extrémités venant se raccorder à la zone (L) du panneau de chaque côté de la bande de transition (5).

3. Montant selon la revendication 1 ou 2, caractérisé par le fait que la partie haute (3) de la zone (L) est située vers l'extérieur, tandis que la partie basse (4) est située vers l'intérieur, la nervure (6) étant prévue sur le bord inférieur de cette partie basse.

4. Montant selon la revendication 3, caractérisé par le fait que l'assemblage de l'extrémité de la partie haute (3) de la zone (L) est effectué au niveau du bord (8a) de la doublure interne (8) appliqué à plat contre le bord (3a) du panneau.

5. Montant selon l'une quelconque des revendications précédentes, caractérisé par le fait que la partie haute (3) comporté, en extrémité haute, une nervure (7) saillante vers l'extérieur.

6. Montant selon l'une quelconque des revendications précédentes, caractérisé par le fait que la nervure (6) prévue sur la partie (4) située vers l'interieur est assemblée à un renfort interne (13) qui s'étend suivant toute la longueur du panneau latéral, de même que cette nervue, de manière à réaliser un corps de longeron du panneau de côté (P).

7. Montant selon la revendication 3, caractérisé par le fait que la section transversale de la partie haute (3) a la forme d'un U tournant sa concavité vers l'intérieur, les extrémités des ailes de ce U étant repliées sensiblement à 90° vers l'extérieur, tandis que la partie de la doublure (8) destinée à former un caisson avec cette partie haute (3) a une section transversale en forme des U dont la concavité est tournée vers l'extérieur, les extrémités des ailes de ce U étant repliées sensiblement à 90° pour venir en appui et être reliées aux ailes repliées de la partie (3), le voile externe (11) ayant une section transversale en forme de U dont la concavité est tournée vers l'intérieur, les extrémités des ailes de ce U étant repliées vers l'extérieur et appliquées et fixées contre la partie basse (4) de la zone (L).

**Patentansprüche**

1. Mittelstütze für die Seitenwand einer Fahrzeug-Karosserie, gebildet aus einem die obere Längsbegrenzung (1) und die untere Längsbegrenzung (2) der Seitenwand miteinander verbindenden Wandabschnitt (L) sowie Verstärkungselementen für diesen Wandabschnitt (L), wobei der Wandabschnitt (L) zwei Bereiche (3, 4) aufweist, welche durch Abkröpfung desselben in Richtung von oben nach unten gebildet sind, so daß die Bereiche (3, 4) in versetzten mittleren Ebenen liegen und durch ein Übergangsstück (5) miteinander verbunden sind, dadurch gekennzeichnet,

— daß die beiden Bereiche (3 bzw. 4) des Wandabschnittes (L) jeweils die Außenseite bzw. die Innenseite der Stütze bilden,
— daß das Übergangsstück (5) im wesentlichen in der mittleren Höhe der Seitenwand angeordnet ist,
— daß die Verstärkungselemente eine innere Unterfütterung (8) umfassen, welche an der Innenseite des die Außenseite der Stütze bildenden Bereiches (3) angeordnet ist sowie eine äußere Abdeckung (11) für den die Innenseite der Stütze bildenden Bereich (4), so daß ein oberer und ein unterer Hohlkörper gebildet werden,
— und daß der die Innenseite bildende Bereich (4) durch eine nach außen gewölbte Verstärkungsrippe (6) abgeschlossen wird, welche sich entlang der Längsrichtung der Seitenwand erstreckt.

2. Mittelstütze nach Anspruch 1, dadurch gekennzeichnet, daß die innere Unterfütterung (8) und die äußere Abdeckung (11) so ausgebildet und angeordnet sind, daß ihre mit dem Wandabschnitt (L) beiderseits des Übergangsstückes (5) verbundenen Enden sich teilweise überlappen.

3. Mittelstütze nach einem der Ansprüche 1 oder 2, dadurch gekennzeichnet, daß der obere Bereich (3) des Wandabschnittes (L) nach außen, der untere Bereich (4) nach innen gerichtet ist, und daß die Verstärkungsrippe (6) am unteren Ende des unteren Bereiches angeordnet ist.

4. Mittelstütze nach Anspruch 3, dadurch gekennzeichnet, daß der Anschluß des Endes des oberen Bereiches (3) des Wandabschnittes (L) im Bereich der Kante (8a) der inneren Unterfütterung (8) bewerkstelligt ist, die flächig gegen die Kante (3a) der Seitenwand anliegt.

5. Mittelstütze nach einem der vorstehenden Ansprüche, dadurch gekennzeichnet, daß der obere Bereich (3) an seinem oberen Ende eine nach außen vorspringende Verstärkungsrippe (7) bildet.

6. Mittelstütze nach einem der vorstehenden Ansprüche, dadurch gekennzeichnet, daß die an dem nach innen gerichteten Bereich (4) ausgebildete Verstärkungsrippe (6) mit einem inneren Verstärkungselement (13) versehen ist, welche sich ebenso wie die Verstärkungsrippe (6) entlang der ganzen Seitenwandlänge erstreckt und mit dieser einen Längsträgerkörper für die Seitenwand (P) bildet.

7. Mittelstütze nach Anspruch 3, dadurch gekennzeichnet,

— daß der obere Bereich (3) im Querschnitt als ein erstes U-Profil mit einer nach innen gerichteten offenen Seite ausgebildet ist,
— daß die Enden der Schenkel des ersten U-Profils etwa um 90° nach außen abgekantet sind,
— daß die Unterfütterung (8), welche mit dem oberen Bereich (3) einen Kasten bildet, im Querschnitt als ein zweites U-Profil mit einer nach außen gerichteten offenen Seite ausgebildet ist,
— daß die Enden der Schenkel dieses zweiten U-Profils etwa um 90° nach außen abgekantet sind, daß sie sich gegen die abgekanteten Enden des ersten U-Profils des oberen Bereiches (3) anlegen und mit diesen verbunden sind,
— daß die äußere Abdeckung (11) im Querschnitt ein U-Profil aufweist, welches mit seiner offenen Seite nach innen gerichtet ist, wobei die Enden der Schenkel dieses U-Profils nach außen abgekantet sind, sich gegen den unteren Bereich (4) des Wandabschnittes (L) anlegen und mit diesem verbunden sind.

## Claims

1. A motor vehicle body side panel pillar formed by a panel zone (L) connecting the top and bottom longitudinal edges (1 and 2 respectively) of said panel and by reinforcing elements for said zone, said zone comprising two parts (3, 4) which are vertically offset and have different central planes, said two parts being connected by a transition strip (5), characterised in that the two parts (3, 4) of the zone (L) are situated respectively outside and inside the pillar; the transition strip (5) is situated substantially at mid-height of the side panel and the reinforcing elements comprise an internal linig (8) fitted behind the outwardly situated part (3) and an external covering wall (11) fitted to the inwardly situated part (4) so as to form a top hollow body and a bottom hollow body; and the inwardly situated part (4) is bordered by a rib (6) which faces outwards and extends along the lenght of the panel.

2. A pillar according to claim 1, characterised in that the inner lining (8) and the outer wall (11) are so disposed and arranged that there is a partial superimposition of their ends adjacent the zone (L) of the panel on each side of the transition strip (5).

3. A pillar according to claim 1 or 2, characterised in that the top part (3) of the zone (L) is situated outwards while the bottom part (4) is situated inwards, the rib (6) being procided on the bottom edge of said bottom part.

4. A pillar according to claim 3, characterised in that the connection of the end of the top part (3) of the zone (L) is effected at the edge (8a) of the inner lining (8) applied flat against the edge (3a) of the panel.

5. A pillar according to any one of the preceding claims, characterised in that the top part (3) has at the top end an outwardly projecting rib (7).

6. A pillar according to any one of the preceding claims, characterised in that the rib (6) provided on the inwardly situated part (4) is connected to an inner reinforcement (13) which extends over the entire length of the side panel, as does said rib, so as to form a longitudinal member of the side panel (P).

7. A pillar according to claim 3, characterised in that the cross-section of the top part (3) is in the form of a U with its concavity facing inwards, the ends of the arms of said U being bent substantially 90° outwards, while that part of the lining (8) which is intended to form a box with said top part (3) has a cross-section in the form of a U with its concavity facing outwards, the ends of the arms of said U being bent substantially 90° to bear on and be connected to the bent arms of the part (3), the outer wall (11) having a cross-section in the form of a U whose concavity faces inwards, the ends of the arms of said U being bent outwards and applied and fixed against the bottom part (4) of the zone (L).

Fig.1.

Fig.2.

Fig.3.

Fig.4.

Fig.5.